# EUROPÄISCHE PATENTSCHRIFT

(11) **EP 0 854 844 B1**
(45) Veröffentlichungstag und Bekanntmachung des Hinweises auf die Patenterteilung: **28.06.2000**
(21) Anmeldenummer: 96934542.0
(22) Anmeldetag: 04.10.1996
(51) Int. Cl.: C02F 3/12, C02F 1/24

(54) **BIOLOGISCHE ABWASSERBEHANDLUNG BEI HOHEN SCHLAMMKONZENTRATIONEN**
BIOLOGICAL METHOD OF TREATING SEWAGE CONTAINING HIGH CONCENTRATIONS OF SLUDGE
TRAITEMENT BIOLOGIQUE DES EAUX USEES CONTENANT DES CONCENTRATIONS ELEVEES EN BOUES

(30) Priorität: 11.10.1995 DE 19537698
(43) Veröffentlichungstag der Anmeldung: 29.07.1998
(73) Patentinhaber: Axiva GmbH, 65926 Frankfurt (DE)
(72) Erfinder: HORZ, Wolfgang, D-65719 Hofheim (DE); ZORN, Friedhelm, D-56370 Ebertshausen (DE); LOHE, Hans, D-61476 Kronberg (DE)
(86) Internationale Anmeldenummer: EP9604326
(87) Internationale Veröffentlichungsnummer: WO9713726

(56) Entgegenhaltungen:
- EP-A- 0 524 376
- DE-A- 3 340 096
- DE-A- 4 331 927
- DE-A- 4 411 991
- GB-A- 2 057 415
- PATENT ABSTRACTS OF JAPAN vol. 013, no. 151 (C-584), 12.April 1989 & JP,A,63 310697 (AKITANE KITAJIMA), 19.Dezember 1988,

## Beschreibung

Die Erfindung betrifft ein Verfahren zur biologischen Behandlung von Abwasser, bei dem ein Gemisch aus Belebtschlamm und Abwasser in einer Belebungsstufe begast und der Belebtschlamm von dem behandelten Abwasser durch Flotation abgetrennt wird.

Verfahren der genannten Art sind bekannt, beispielsweise aus der deutschen Patentanmeldung P 44 11 991.7, die hiermit per Bezugnahme integriert ist. Bei einem solchen Verfahren verläßt der Schlamm zusammen mit der hydraulischen Fracht, dem behandelten, bzw. gereinigten Abwasser, die Belebungsstufe und wird von der hydraulischen Fracht in einer Trennstufe durch Flotation abgetrennt und zum Teil in die Belebungsstufe zurückgeführt, um eine bestimmte Schlammkonzentration in der Belebungsstufe zu halten. Aufgrund dieser Verfahrensweise besteht eine Abhängigkeit zwischen der Schlammkonzentration in der Belebungsstufe und der Schlammkonzentration im Ablaufstrom aus der Trennstufe, der in die Belebungsstufe zurückgeführt wird, dem sogenannten Rücklaufschlamm. Die Schlammkonzentration in der Belebungsstufe bestimmt sich somit aus der Mischung des zurückgeführten Schlammes und des fast feststofffreien Abwassers. Die auf diese Weise eingestellten Schlammkonzentrationen in der Belebungsstufe liegen gewöhnlich bei 5 g/l (vgl. obengenannte Patentanmeldung). Diese Schlammkonzentration ist ein wichtiger Parameter bei der Dimensionierung von biologischen Abwasserbehandlungsanlagen, da sie u.a. das Volumen des Belebungsreaktors bestimmt, wobei das Volumen mit steigender Schlammkonzentration sinkt. Abwasserbehandlungsanlagen, in denen höhere Schlammkonzentrationen gefahren werden könnten, wären daher wünschenswert, wenn sie nicht einige gravierende Nachteile hätten. Ein Nachteil solcher Anlagen besteht darin, daß der Flotationsteil in Abhängigkeit von der Schlammkonzentration sehr groß dimensioniert werden muß und dadurch entsprechend teuer wird. Der Betrieb dieser Flotationsanlagen ist außerdem schwierig, da sie sehr empfindlich auf Veränderungen im Abwasserstrom reagieren. Des weiteren sind die Betriebskosten sehr hoch, da die benötigte hohe Wassermenge für die Flotation direkt (proportional) von der Schlammkonzentration abhängig ist.

Es wurde nun überraschenderweise festgestellt, daß diese Nachteile erheblich abgeschwächt werden, wenn man ein Verfahren der eingangs genannten Art derart modifiziert, daß die Konzentration des Belebtschlammes in der Belebungsstufe ≥ 6 g/l ist und daß die Flotation eine Druckentspannungsflotation ist.

Gegenstand der Erfindung ist daher ein Verfahren zur biologischen Behandlung von Abwasser, bei dem ein Gemisch aus Belebtschlamm und Abwasser in einer Belebungsstufe begast und der Belebtschlamm von dem behandelten Abwasser durch Flotation abgetrennt wird, dadurch gekennzeichnet, daß die Konzentration des Belebtschlammes in der Belebungsstufe ≥ 6 g/l ist, daß die Flotation eine Druckentspannungsflotation ist daß man die für die Flotation zu entnehmende Suspension mit einer Strömungsgeschwindigkeit ≥ 0,3 m/sec gegen die natürliche Blasenaufstiegsrichtung führt, dabei die Suspension mittels einer Begasungsvorrichtung zusätzlich begast, die begaste Suspension am Boden der Begasungsvorrichtung entnimmt und der Flotation zuführt, wie beispielsweise in der P 44 11 991.7 beschrieben. Eine bevorzugte Ausführungsform des erfindungsgemäßen Verfahren ergibt sich aus dem Anspruch 2.

Die bevorzugte Ausführungsform des erfindungsgemäßen Verfahrens ist dadurch gekennzeichnet, daß die Konzentration des Belebtschlammes in der Belebungsstufe ≥ 8 g/l, bevorzugt ≥ 10 g/l, besonders bevorzugt ≥ 12 g/l ist.

Der Vorteil des erfindungsgemäßen Verfahrens ist im wesentlichen darin zu sehen, daß sowohl die Belebungsstufe als auch die Flotationsstufe von biologischen Abwasserbehandlungsanlagen im Vergleich zu konventionellen Abwasserbehandlungsanlagen kleiner dimensioniert werden können. Dies verbessert zugleich die Wirtschaftlichkeit und erleichtert den Betrieb.

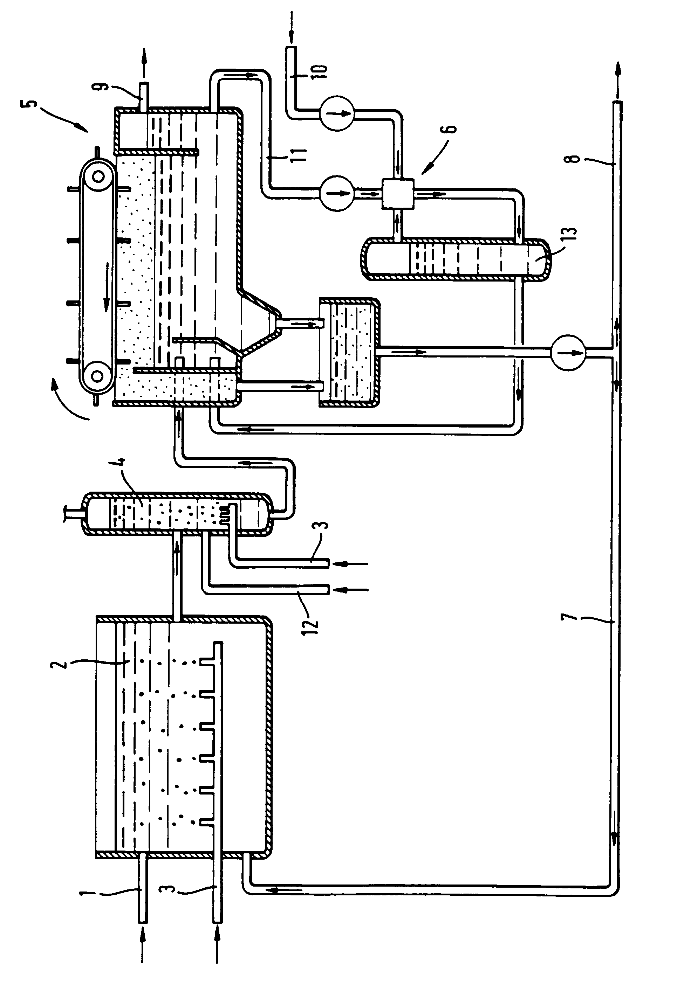

Im folgenden wird eine mögliche Ausführungsform des erfindungsgemäßen Verfahrens anhand des in der Figur dargestellten Verfahrensfließbildes näher erläutert.

Ein Abwasser 1 wird in einem Belebungsraum 2 einer Belebungsstufe mit einem als Rücklaufschlamm 7 bezeichneten Belebtschlamm vermischt und mit Luft 3 begast. Dabei werden die im Abwasser enthaltenen Schadstoffe biologisch abgebaut. Das Gemisch aus Schlamm und Wasser wird dann einem senkrecht stehenden Abstromreaktor 4 zugeleitet. In diesem Abstromreaktor 4, der als Begasungsvorrichtung dient, wird das Gemisch aus Belebtschlamm und Wasser nach unten geführt und dabei mit Luft begast. Falls notwendig, kann ein Flockungsmittel 12 zugegeben werden. Das Gemisch aus Belebtschlamm und Wasser wird dann am Boden des Abstromreaktors 4 abgezogen und eine Flotationszelle 5 zugeführt, in der der Belebtschlamm vom Wasser abgetrennt wird. Dies wird dadurch unterstützt, daß in einer Druckwasserstation 6 Wasser und Luft 10 auf einen höheren Druck gebracht werden und in die Flotationszelle 5 hinein entspannt werden. Als Wasser kann dazu das gereinigte Abwasser 11 verwendet werden. Eine Kolonne 13 dient als Vorrats- oder Puffertank. Der abgetrennte Belebtschlamm wird zum Teil als Rücklaufschlamm 7 in den Belebungsraum 2 zurückgeführt. Der Rest wird als Überschußschlamm 8 entsorgt. Das gereinigte Abwasser wird als Klarwasser über einen Ablauf abgezogen.

Das erfindungsgemäße Verfahren wird anhand zweier Ausführungsbeispiele weiter verdeutlicht.

Die Beispiele beziehen sich auf biologische Abwasserbehandlungsanlagen, in welchen die Belebtschlamm-Abtrennungmittels einer DruckentspannungsFlotation mit vorgeschalteter Abstromkolonne wie oben beschrieben, erfolgt. Vor der biologischen Behandlung werden die Abwässer vorgeklärt. Die sich für diese speziellen Abwässer jeweils einstellende Biomasse zeigte bei Erhöhung der Belebtschlamm-Konzentration keine wesentliche Veränderung der Abbaukinetik. Eine Limitierung der Feststoffgehalt-Konzentationserhöhung bezüglich des individuellen Stoffwechselprozesses zum Abbau der Einzelkomponenten im Abwasser wurde berücksichtigt.

In den Einzelbeispielen wurde das Volumen des Belebungsraumes und die Belebtschlamm-Konzentration variiert.

### Beispiel 1:

### Daten zur Abwasser- bzw. Prozeßcharakteristik:

| | |
|---|---|
| Abwassermenge | 30 m³ / h |
| BSB₅-Konzentration | 2 kg BSB₅ / m³ |
| (Biologischer Sauerstoff-Bedarf) | |
| CSB-Konzentration | 3,4 kg CSB / m³ |
| (Chemischer Sauerstoff-Bedarf) | |
| pH-Wert | 6,8 |
| Rücklaufschlamm-Konzentration | 40 g/l |
| BSB₅-Konzentration im Auslauf | < 45 mg/l |
| Feststoffgehalt im Auslauf | < 50 mg/l |

### Einzelbeispiele

| Belebungsvolumen (m³) | Belebtschlamm-Konzentration Im Belebungsraum (g/l) |
|---|---|
| 611 | 6 |
| 488 | 8 |
| 412 | 10 |

### Beispiel 2

### Daten zur Abwasser- bzw. Prozeßcharakteristik:

| | |
|---|---|
| Abwassermenge | 120 m³ / h |
| BSB₅-Konzentration | 2,2 kg BSB₅ / m³ |
| CSB-Konzentration | 3,3 kg CSB / m³ |
| pH-Wert | 7,1 |
| Rücklaufschlamm-Konzentration | 50 g/l |
| BSB₅-Konzentration im Auslauf | <45 mg/l |
| Feststoffgehalt im Auslauf | < 50 mg/l |

### Einzelbeispiele

| Belebungsvolumen (m³) | Belebtschlamm-Konzentration Im Belebungsraum (g/l) |
|---|---|
| 1516 | 12 |
| 1366 | 14 |
| 1271 | 16 |

## Patentansprüche

1. Verfahren zur biologischen Behandlung von Abwasser, bei dem ein Gemisch aus Belebtschlamm und Abwasser in einer Belebungsstufe (2) begast und der Belebtschlamm von dem behandelten Abwasser durch Flotation (5) abgetrennt wird, dadurch gekennzeichnet, daß die Konzentration des Belebtschlamms in der Belebungsstufe (2) ≥ 6 g/l ist, daß die Flotation (5) eine Druckentspannungsflotation ist, daß man die für die Flotation zu entnehmende Suspension mit einer Strömungsgeschwindigkeit ≤ 0,3 m/sec gegen die natürliche Blasenaufstiegsrichtung führt, dabei die Suspension mittels einer Begasungsvorrichtung (4) zusätzlich begast, die begaste Suspension am Boden der Begasungsvorrichtung (4) entnimmt und der Flotation (5) zuführt.

2. Verfahren nach Anspruch 1, dadurch gekennzeichnet, daß die Konzentration des Belebtschlammes in der Belebungsetufe (2) ≥ 8 g/l, bevorzugt ≥ 10 g/l, besonders bevorzugt ≥ 12 g/l ist.

## Claims

1. A process for the biological purification of waste water, in which a mixture of activated sludge and waste water is treated with gas in an activation stage (2) and the activated sludge is separated off from the treated waste water by flotation (5), wherein the concentration of the activated sludge in the activation stage (2) is ≥ 6 g/l, wherein the flotation (5) is a pressure-relief flotation, wherein the suspension to be taken off for the flotation is conducted at a flow velocity ≤ 0.3 m/sec against the natural direction of bubble rise, in the course of this the suspension is additionally treated with gas by means of a gas-treatment apparatus (4), the gas-treated suspension is taken off at the bottom of the gas-treatment apparatus (4) and fed to the flotation (5).

2. The process as claimed in claim 1, wherein the concentration of the activated sludge in the activation stage (2) is ≥ 8 g/l, preferably ≥ 10 g/l, particularly preferably ≥ 12 g/l.

## Revendications

1. Procédé de traitement biologique des eaux usées dans lequel un mélange de boues activées et d'eaux usées est activé dans un étage d'activation (2) et on sépare les boues activées et les eaux usées par flottation (5), caractérisé en ce que la concentration en boues activées dans l'étage d'activation (2) est ≥6 g/l, que la flottation (5) est une flottation pression-détente, en ce que la suspension à prélever pour la flottation (5) est conduite à une vitesse d'écoulement ≤0,3 m/sec contre la montées naturelle des bulles, tout en pratiquant de plus une aération de la suspension à l'aide d'un dispositif d'aération (4), on soutire la suspension aérée au fond du dispositif d'aération (4) et on l'apporte à la flottation (5).

2. Procédé selon la revendication 1, caractérisé en ce que la concentration en boues activées dans l'étage d'actvation (2) est ≥8 g/l, de préférence ≥10 g/l, de manière particulièrement préférée ≥12 g/l.
